# EUROPEAN PATENT SPECIFICATION

(11) **EP 3 584 461 B1**
(45) Date of publication and mention of the grant of the patent: **17.02.2021**
(21) Application number: 19176812.6
(22) Date of filing: 27.05.2019
(51) Int. Cl.: F16D 3/38

(54) **PROTECTIVE EMBODIMENT OF A MIDSHIP ASSEMBLY**
SCHUTZAUSFÜHRUNG EINER MITTELSCHIFFSANORDNUNG
EXÉCUTION DE PROTECTION D'UN ENSEMBLE AU MILIEU D'UN NAVIRE

(30) Priority: 19.06.2018 TR 201808678
(43) Date of publication of application: 25.12.2019
(73) Proprietor: Tirsan Kardan Sanayi Ve Ticaret Anonim Sirketi, Yunusemre - Manisa (TR)
(72) Inventor: TASAN, KORKUT, Manisa (TR)
(74) Representative: Yamankaradeniz, Kemal

(56) References cited:
- US-A- 2 081 237
- US-A- 2 897 023
- US-A- 4 865 470

## Description

### Technical Field

The present disclosure, relates to a midship assembly located on propshafts transmitting rotation motion and moments in engine vehicles and used for support of propshaft onto vehicle.

The present disclosure, particularly relates to a midship assembly eliminating the loss of function of wear washer arising out of a space between midship stub, by means of making wear washer member compact with dust sheet.

### Background of the Art

The length of propshaft increases in proportion to increase in distance between the equipment it works between (for instance, gearbox and differential), and transition from use of one part propshaft embodiment to two or three-part propshaft embodiment is now applied. The increase of the length requires housing of propshaft making angle and length compensation by taking support from vehicle chassis. Mentioned housing operation is provided by a member called center bearing assembly and provided in front propshaft structure. It is a member absorbing the vibrations on the propshaft and compensating the forces arising from self-weight of the shaft and is fixed to the chassis. Mounting of midship assembly is conducted in form of packaging of center bearing assembly bearing by use of dust sheet and fastener between midship yoke and midship stub.

In known art, a space is provided between inner diameter of wear washer and midship stub in order to enable slide of wear washer on midship stub. Midship yoke is inserted and end part of midship yoke pushes the wear washer and compressing of center bearing assembly inner ring between side surface is provided for mounting of members in the midship assembly. The space between wear washer and midship stub causes uncontrolled movement of wear washer during mounting of members of midship assembly. Wear washer might not stay on the axis it is required to be end of insertion of midship yoke, might leave axis or crushed and deformed. In this case wear washer fails to perform its main function.

In the known art, dust sheet is made from metal material. Corrosion may occur on metal structure surface. Dust sheet is further coated in order to provide protection of surface against corrosion. This causes extra cost.

US patent application with the publication number of US4865470 A relates to an intermediate shaft support for a drive shaft and to a replacement kit embodying same. The shaft support comprises an inner race having an inner diameter of predetermined value, an outer race, and bearing elements therebetween, a grease retainer of generally U-shaped tranverse cross section around said outer race, a resilient cushion member extending around said retainer, said cushion member having annular flanges extending away from said retainer, a supporting bracket extending around said cushion member and having means to attach said bracket to a portion of the vehicle, two flingers, one located on each side of said inner race, each of said flingers having an inner mounting flange having a circular inner edge of a diameter substantially equal to said inner diameter of said inner race, said mounting flange being positioned adjacent an annular edge of said inner race, and a protective flange extending outwardly beyond said outer race in a generally radial direction from the shaft, said protective flange of each of said flingers extending outwardly beyond said grease retainer and the corresponding annular flange of said cushion member having an outer portion extending inwardly toward said cushion member.

US patent application with the publication number of US2081237 A relates to shaft mountings, and particularly to a type which may be utilized advantageously in the support from a frame, such as a vehicle frame, of one of the sections of propeller or driving shaft.

US patent application with the publication number of US2897023A relates to a shaft center bearing including a rubber bracket having an opening therethrough, a rotatable shaft extending through said opening, a shaft bearing retained in said bracket opening only by the shape of the rubber bracket adjacent the opening, said rubber bracket being provided with two staggered series of slots opening inwardly from each side thereof separated by a thin central wall to render said bracket soft and flexible to offer low resistance to spinning forces due to shaft eccentricity so that said shaft passes through its critical speed well below the normal operating range of said shaft, and a peripheral reinforcement for said rubber bracket.

As a result, due to above described disadvantages and inadequacy of existing solutions, it has been necessary to make development in the related art.

### Aim of the Invention

The invention has been developed with inspiration from existing situations and aims to eliminate the above mentioned disadvantages.

Main aim of the invention is to make wear washer and dust sheet compact and inserting onto midship yoke and midship stub and thus to eliminate the loss of function of wear washer arising out of space between midship stub.

Another aim of the invention is to provide reduction in number of operation, duration and thus cost by providing completion of mounting of wear washer in one operation by means of eliminating inserting dust sheet onto midship yoke.

A further aim of the invention is to enable production of dust sheet from materials such as plastic etc. thanks to its compact design, and thus to prevent corrosion on the surface.

Another aim of the invention is to eliminate need for additional coating operation as corrosion is prevented on surface of dust sheet and thus provide cost advantage.

In order to achieve the above mentioned aims, the invention relates to a midship assembly comprising fastener located on propshaft (B) providing transmission of motion received from transmission output shaft to differential and providing connection of propshaft (B) to vehicle chassis, midship stub housing the fastener, midship yoke connected to midship stub and providing connection of rear propshaft and joint, wear washer located between center bearing assembly and midship yoke and preventing contact of midship yoke with center bearing assembly, rear housing washer providing mounting of members on the propshaft and it comprises dust sheet compact with wear washer and located between center bearing assembly and wear washer, used for protection of bearings in the center bearing assembly and preventing dirt, dust penetration to bearings, preventing leaving of wear washer from axis and preventing deformation during mounting to center bearing assembly.

The structural and characteristics features of the invention and all advantages will be understood better in detailed descriptions with the figures given below and with reference to the figures, and therefore, the assessment should be made taking into account the said figures and detailed explanations.

### Brief Description of the Drawings

Figure 1 is an illustrative view of propshaft comprising midship assembly subject-matter to the invention.
Figure 2 is a right view of illustrative picture of midship assembly disclosed subject-matter to the invention

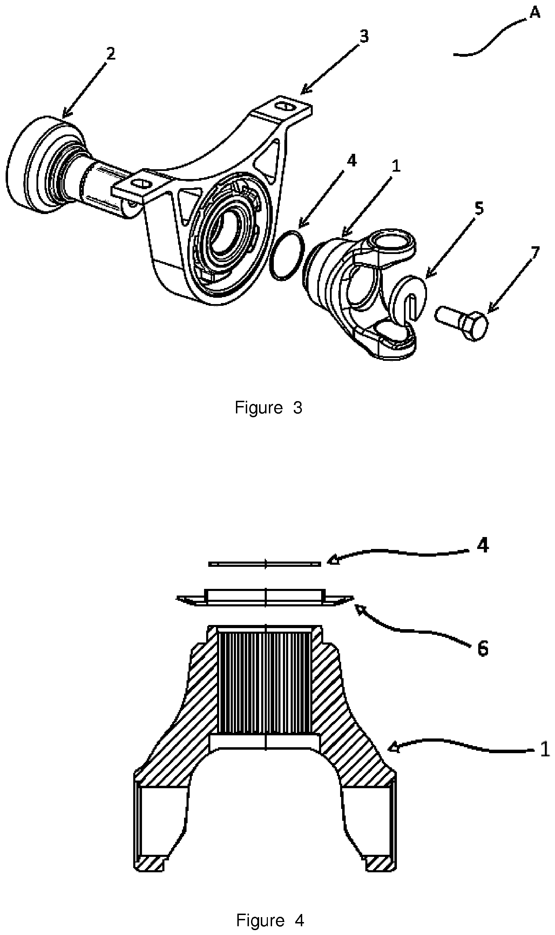

Figure 3 is a left view of illustrative picture of midship assembly disclosed subject-matter to the invention
Figure 4 is a view of current art of dust sheet and wear washer.

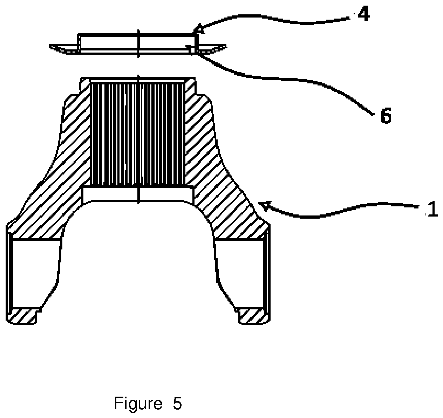

Figure 5 is a view of compact dust sheet and wear washer disclosed subject- matter to the invention.

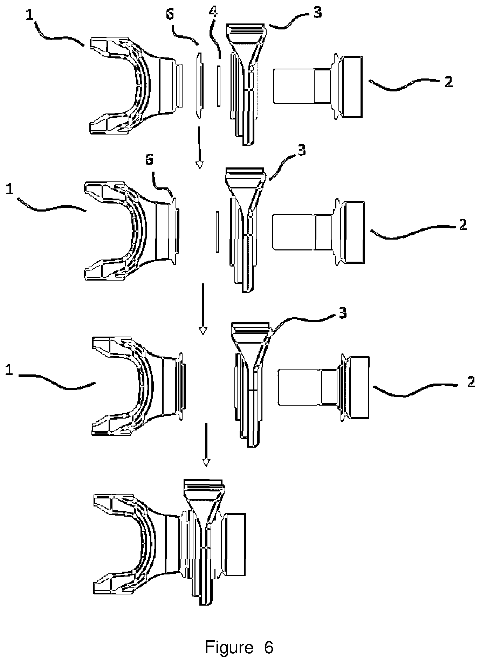

Figure 6 is a view of members in midship assembly during current mounting.
Figure 7 is a view of mounting order of midship assembly members disclosed subject-matter to the invention

### Description of Part References

**B.** Propshaft
   **B.1.** Front propshaft
   **B.2.** Rear propshaft
**A.** Midship Assembly
**1.** Midship Yoke
**2.** Midship Stub
**3.** Center Bearing Assembly
**4.** Wear washer
**5.** Midship washer
**6.** Dust sheet
**7.** Fastener

### Detailed Description of the Invention

In this detailed description, the preferred embodiments of a midship assembly (A) subject-matter to the invention have been disclosed solely for the purpose of better understanding of the subject.

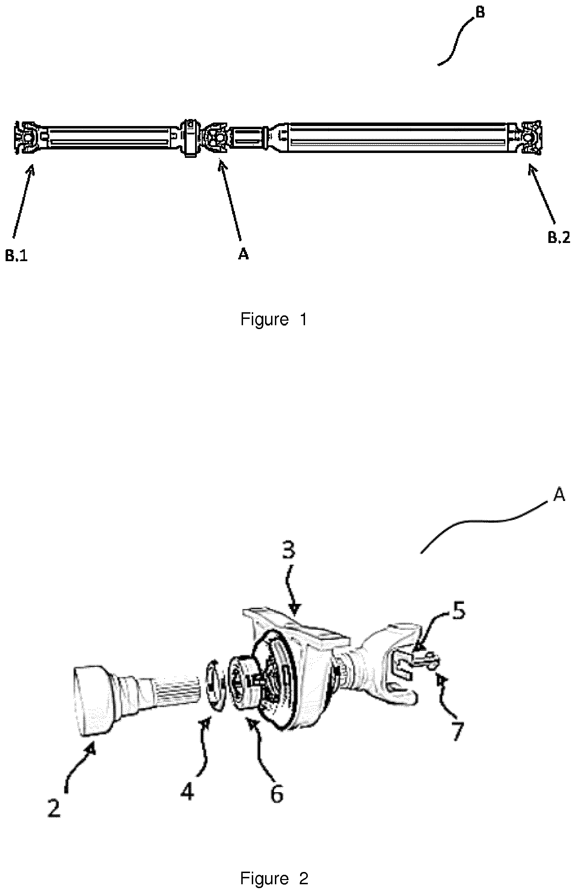

The propshaft (B) shown in Figure 1 and providing transmission of motion received from transmission output shaft to differential comprises, front propshaft (B.1), rear propshaft (B.2) and midship assembly (A).

Midship assembly (A) of the invention shown in figure 2 comprises midship stub (2), center bearing assembly (3), wear washer (4), midship washer (5), dust sheet (6) and fastener (7).

The midship stub (2) is a circular male part matching midship yoke(1) (female part) in midship assembly (A) and provides welded connection of front propshaft (B.1). Also, midship stub(2) houses benter bearing assembly (3) which rubber structure, providing connection of propshaft (B) to vehicle chassis.

Wear washer (4) is located between the center bearing assembly (3) and the midship yoke (1) and prevents direct contact between midship yoke (1) in midship assembly (A) and said center bearing assembly (3) during mounting of propshaft (B) to vehicle and thus reduces wear.

The midship yoke(1) is flap female part matching midship stub(2) in midship assembly (A) and provides connection to rear propshaft (B.2).

Dust sheet (6) is located between the center bearing assembly (3) and the wear washer (4) and is used for prevention of penetration of dirt, dust etc. into bearings in order to protect bearings located in the center bearing assembly (3). Protection of the bearings also affects life of center bearing assembly (3) positively.

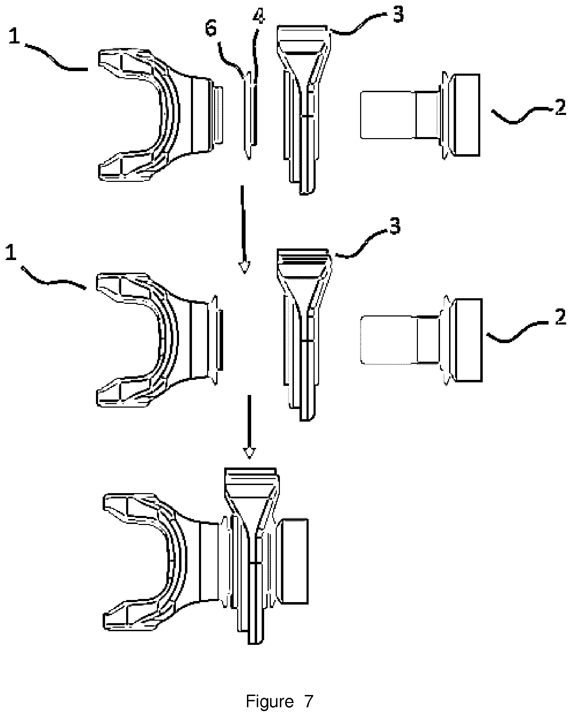

The wear washer (4) and the dust sheet (6) are made compact. As shown in figure 7, the part made compact is inserted to midship yoke (1) and the inserted two parts are inserted onto the midship stub (2). Thus, the wear washer (4) seats fully between the midship yoke (1) and the center bearing assembly (3) surface. Since wear washer (4) and the dust sheet (6) located on the midship yoke (1) are compact, the space between the wear washer (4) and the midship stub (2) is eliminated and leaving the axis occurring during mounting of the wear washer (4) to the center bearing assembly (3) and arising from uncontrolled movement of the wear washer (4) and deformation during insertion for mounting to the center bearing assembly (3) are prevented.

The dust sheet (6) is made compact with the wear washer (4) and the dust sheet (6) made from metal materials in the related art can now be made from materials such as plastic etc.

The midship washer (5) and the fastener (7) are used for mounting of the members in the propshaft (B) and connection between midship stub (2) and midship yoke(1) is provided.

## Claims

1. A midship assembly (A) comprising fastener (7) located on propshaft (B) providing transmission of motion received from transmission output shaft to differential and providing connection of propshaft (B) to vehicle chassis, midship stub(2) housing the fastener (7), midship yoke(1) connected to the midship stub (2) and providing connection of rear propshaft (B.2) and joint, wear washer (4) located between a center bearing assembly (3) and the midship yoke(1) and preventing contact of the midship yoke(1) with the center bearing assembly (3), midship washer (5) providing mounting of members on the propshaft (B) comprising:
• a dust sheet (6) compact with the wear washer (4) and located between the center bearing assembly (3) and the wear washer (4), used for protection of bearings in the center bearing assembly (3) and preventing dirt, dust penetration to bearings, preventing leaving of the wear washer (4) from axis and preventing deformation during mounting to the center bearing assembly (3), **characterized in that**, the dust sheet (6) is made from plastic material.

## Patentansprüche

1. Mittelanordnung (A), umfassend ein Befestigungselement (7), das an der Gelenkwelle (B) angeordnet ist und eine Übertragung der von der Getriebeausgangswelle empfangenen Bewegung zu dem Differential bereitstellt und eine Verbindung der Gelenkwelle (B) mit dem Fahrzeugchassis bereitstellt, einen Mittelstumpf (2), der das Befestigungselement (7) aufnimmt, ein Mitteljoch (1), das mit dem Mittelstumpf (2) verbunden ist und die Verbindung der hinteren Gelenkwelle (B.2) und des Gelenks bereitstellt, eine Verschleißscheibe (4), die sich zwischen einer Zentrallageranordnung (3) und dem Mitteljoch (1) befindet und den Kontakt des Mitteljochs (1) mit der Zentrallageranordnung (3) verhindert, wobei die Mittelscheibe (5) die Montage von Elementen an der Gelenkwelle (B) bereitstellt, umfassend:
eine Staubplatte (6), die mit der Verschleißscheibe (4) kompakt ist und sich zwischen der Zentrallagerbaugruppe (3) und der Verschleißscheibe (4) befindet und für den Schutz der Lager in der Zentrallageranordnung (3) und zum Verhindern des Eindringens von Schmutz und Staub in Lager, zum Verhindern des Verlassens der Verschleißscheibe (4) von der Achse und zum Verhindern einer Verformung während der Montage an der Zentrallageranordnung (3) verwendet wird, **dadurch gekennzeichnet, dass** die Staubplatte (6) aus Kunststoffmaterial hergestellt ist.

## Revendications

1. Ensemble joint de transmission médian (A) comprenant un élément de fixation (7) situé sur l'arbre de transmission (B) assurant la transmission du mouvement reçu en provenance de l'arbre de sortie de transmission au différentiel et assurant le raccordement de l'arbre de transmission (B) au châssis du véhicule, la tige (2) de joint de transmission médian logeant l'élément de fixation (7), une noix de cardan (1) de joint de transmission médian relié à la tige (2) de joint de transmission médian et assurant le raccordement de l'arbre de transmission arrière (B.2) et du joint, une rondelle d'usure (4) située entre un ensemble palier central (3) et la noix de cardan (1) de joint de transmission médian et empêchant le contact de la noix de cardan (1) de joint de transmission médian avec l'ensemble de palier central (3), la rondelle (5) de joint de transmission médian assurant le montage d'éléments sur l'arbre de transmission (B) comprenant :
une plaque anti-poussière (6) compacte avec la rondelle d'usure (4) et située entre l'ensemble de palier central (3) et la rondelle d'usure (4), utilisée pour la protection des paliers dans l'ensemble palier central (3) et empêchant la pénétration de la saleté et de la poussière dans les paliers, empêchant la sortie de la rondelle d'usure (4) de l'axe et empêchant la déformation durant le montage sur l'ensemble palier central (3), **caractérisé en ce que** la plaque anti-poussière (6) est en matière plastique.
